# EUROPEAN PATENT APPLICATION

(11) **EP 1 542 430 A1**
(43) Date of publication of application: **15.06.2005**
(21) Application number: 03028250.3
(22) Date of filing: 09.12.2003
(51) Int. Cl.: H04L 29/08, H04Q 7/22

(54) **Method and arrangement for automated predictive presence service**

(71) Applicant: SIEMENS AKTIENGESELLSCHAFT, 80333 München (DE); British Telecommunications Public Limited Company, London EC1A 7AG (GB)
(72) Inventor: Eardley, Philip, Ipswich IP4 2AH (GB); Eisl, Jochen, 85748 Garching (DE); Hepworth, Eleanor, Southampton SO14 6HZ (GB)

(57) **Abstract**

Method for providing an automated predictive presence service, whereby the predictive presence service goes beyond the known predictive presence services and enables a subscription based service to tailor features of this service and the content to be deliverd, combines predictive presence with other conditions, or triggers specific actions that are related to the upcoming presence of any moving item.

## Description

The invention relates to a method for providing an automated predictive presence service.

The technical problem is about providing an application service that is dependent on the predicted location of a mobile node or some wireless communication device as opposed to its current location. For example, where the content, format of the content, or the availability of the application alters based on where the mobile device will be at a future point in time.

Currently, presence and location information is used by mobile applications to enhance services, such as supporting emergency calls (to allow the emergency services to pinpoint the location of the caller). It is also used to provide content based on the current location of the user including:
- Advertisement information e.g. happy hour at a pub you are walking past
- Tour guide information e.g. information about the local sites as you stand looking at them.
- General information about an area, e.g. where the restaurants and pubs are.

The above information is provided based on the current location of the user. In addition, basic predictive presence services do exist, but there has been no widespread usage of predictive presence information in applications so far. The implementations are only capable of performing simple tasks and are inflexible. The only applications that are known to the authors are bus/train information systems that are deployed to provide estimated arrival times for public transport buses and trains. The bus information system predicts when a bus or train will arrive at a stop/station.

The vehicle calculates its position either in relation to waypoints along the route, e.g. the train stations or UHF beacons located along the route, or from a GPS receiver fitted to the vehicle, and forwards its position to a central server, which then works out when the vehicle will get to the stop. This information is displayed on screens at the bus stop or train station, or can be accessed via the internet. The users of the information have no control over content, format, etc.

From the foregoing, it is an object of the invention to provide a method for an automated predictive presence service and an arrangement for implementing such a method, whereby the predictive presence service goes beyond the known predictive presence services and enables a subscription based service to tailor features of this service, combines predictive presence with other conditions, or triggers specific actions that are related to the upcoming presence of any moving item.

This object is solved by a method according to claim 1, and an arrangement according to claim 15.

One of the ideas underlying the invention is to develop further the existing location services so that the information is provided based on the future location of a mobile user, a vehicular network or more generally any moving item or mobile device, which is equipped with wireless communication technology. An instance of a mobile device in the technical area of the invention can be user owned mobile or portable equipment, or fixed equipment attached to a moving network, e.g. a vehicular network. Location prediction then opens up a new range of service offerings in mobile networks including 3G-networks and beyond where the timely delivery of this information is essential. Prediction of presence can, for example, trigger actions for improvement in working processes, support the efficient coordination of daily time management of individuals and groups of persons, or even to prevent or counteract events that might result in accidents or catastrophes.

In contrast to the known applications, which make use of predictive presence information in a very restricted way, the invention described here comprises the following features:
- The service has three different roles (subscriber, mobile entity and recipient) with a clear functional distinction and capabilities of the different parties or devices;
- the different roles as defined here refer to non-human users, and in the case of a non-human recipient device, it may process the received information further;
- predictive presence can be combined with other information to judge by information processing whether the conditions for sending a notification to the recipient are met;
- several predictive presence conditions may be combined with boolean operations to form conditions that may satisfy complex service requests;
- subscription mode for the predictive presence service can alter in a variety of ways, i.e. there are more choices than just "one time" based subscription;
- the service can be individually tailored for or configured by the subscriber;
- predictive presence service is not limited to vehicular networks with timetable based operation;
- the service may in addition include statistical information concerning the accuracy of the predictions of future presence;
- the service can be used to track passenger location, not just the location of a vehicle;
- the service can be implemented by a server on the vehicle, as well as in the fixed network.

In detail, a method according to the invention for providing an automated predictive presence service comprises the steps of
- sending a subscription message including subscription information from a subscribing device to a predictive presence server;
- in response to the subscription information, defining and storing in the predictive presence server:
   -- content information related to application content, a reference to an application or even code for a running application, which is to be delivered to a receiving device or group of devices and
   -- a predictive presence condition for the delivery of the content;
- detecting by a location tracking server the current location of the mobile device making use of a wireless communication network the mobile device is attached to;
- sending a location message including location information related to the current location of the mobile device from the location tracking server to the predictive presence server;
- processing the location information and the predictive presence condition in the predictive presence server to detect, whether the predictive presence condition is met;
- in case the predictive presence condition is met, providing content, a reference to content or even running code from the predictive presence server to the receiving device.

According to the invention, three different roles for the predictive presence service are defined, namely the subscriber, a mobile entity and a recipient. The subscriber is represented by a user terminal or device subscribing to the service that defines the exact content to be delivered and the conditions for the delivery. The mobile entity is a device that is located within a moving network. For instance the mobile entity is an electronic device, which is within a vehicle. The role of a mobile entity can also be represented by a group of mobile devices. For instance the size of a taxi ordered depends on the number of people (associated with mobile devices) on the train who want to go to a specific location. The recipient is an electronic communication device or group of electronic communication devices (a person or a group of persons might be equipped with). Alternatively the recipient is represented by one or more IP host(s) that control(s) or operate(s) any electronic device / machine or other facility. A predictive presence server delivers content specific information to one or more recipients, if the conditions for predictive presence are met. Location might be predicted, based on combining present location with other info, e.g. past location, timetable info, past behaviour of other mobile devices, direction and speed of movement etc.

In one preferred embodiment of the inventive method, the processing of the location information comprises a calculation of a predicted location of the mobile device based on an assumed semi-deterministic mobility behaviour of the wireless communication network (such as a vehicular network), with the assumption that the mobile device is either substantially at rest with reference to the network or moves arbitrarily within a region defined by the geographical boundaries in case of a vehicular network.

In an alternative preferred embodiment of the inventive method, the processing of the location information comprises a calculation of a predicted location of the mobile device based on an assumed semi-deterministic behaviour of the mobile device when moving through the wireless communication network.

In further developed embodiments of the invention, the predictive presence condition describes in formal notation the presence of the mobile device for an estimated arrival time. In further preferred embodiments, the predictive presence condition includes additional formal conditional statements regarding at least one of
- date and/or time of day,
- mobile device specific information,
- mobile device user profile specific information,
- receiving device specific information,
- receiving device user profile specific information.

In an embodiment developed still further, the conditional statements are related to each other via Boolean operations to form the predictive presence condition.

Therefore, a predictive presence condition can be elementary by describing the presence of a mobile entity or group of mobile entities for an estimated arrival time or it can include additional conditional aspects referring to date and time of day, mobile entity specific information (user profile or device information or a combination of it), recipient specific information (user profile or device information or a combination of it) or location of recipient. These conditions can be put into relation by applying boolean operations to form a complex condition for predictive presence. Again several elementary or complex conditions can be combined with boolean operators to form a grouped condition for predictive presence following a hierarchical structure.

In further embodiments of the inventive method, the predictive presence condition is deleted in the predictive presence server after it has been met once or a specified number of times. Additionally or alternatively, the predictive presence condition is valid for a time interval calculated in the predictive presence server according to the subscription information.

In other words, subscription for a predictive presence rule can specify the rules lifetime. A rule syntax is applied for management and processing of predictive presence statements and describes the specific language that is used between subscribing device and predictive presence server. For a one-off subscription, a rule is deleted from the predictive presence server after it has been processed once. Alternatively, a lifetime indication configured for the rule keeps it active for the specified time interval. A token based subscription for a rule enables the subscriber to specify the number of processing events of the respective rule by the predictive presence server. Finally a rule without expiration is active in the predictive presence server unless it is deleted by the subscriber or some other external event.

In still further embodiments, the subscription information comprises a notification medium for the content and a way of addressing the receiving entity.

In other words, notification medium and recipient addressing can be configured by the subscriber during creation or modification of a predictive presence rule. The notification medium describes the network and application that is used by the predictive presence server to send the required information. A recipient address specification describes how to reach a specific recipient using a certain notification medium. This can be done by IP address, DNS host name or any application and network specific addressing mechanism. Configuration of the predictive presence rule determines whether information is exchanged by one explicit notification mechanism describing the notification medium and addressing or whether several mechanisms can be used in parallel.

Furthermore, a notification mechanism can be specified with mandatory or optional attribute. For a mandatory notification mechanism the predictive presence server returns an error message to the subscriber, if the notification can't be delivered. For an optional notification mechanism the predictive presence server ignores the failure of message delivery, if there is any other notification mechanism associated with the same predictive presence rule that can be accomplished successfully.

In further preferred embodiments, by sending a modification message from the subscription device to the predictive presence server and subsequent processing of the modification message in the predictive presence server, the predictive presence condition is modified.

In another embodiment of the inventive method, the content provided to the receiving device is related to a location, where the mobile device is predicted to arrive.

The content may be provided by delivering it via transmission from the predictive presence server to the receiving device (push mode) and/or by providing the receiving entity access to the content (pull mode).

In other words, a predictive presence server can either operate in push mode or pull mode. The mode of operation can be specified during the subscription or later modification with the creation or modification of a rule for predictive presence. In pull mode a recipient has to authenticate with the predictive presence server before the information associated with the predictive presence of one or more mobile entities can be retrieved. In push mode the predictive presence server is responsible for forwarding information to one or more recipients.

The content to be provided may be plain text and/or application related content or a reference, where such information can be found.

In still further embodiments of the inventive method, the content to be provided is application related information, in response to which the receiving entity processes predetermined and/or received application content. Alternatively the recipient is provided with a reference to application content, i.e. before processing the information the receiving entity has to retrieve it from a location address, which is specified in the reference.

Thus, information forwarded to recipients can be configured by the subscriber during the creation or modification of a predictive presence rule. The information can present plain text or more complex application specific content and additional application related information which enables the recipient to correctly process the received application content. Alternatively the information to be sent to the receiving device can include a running application, e.g. a specific java applet depending on the predicted location of the mobile entity.

An arrangement for implementing a predictive presence service of any one of the preceding claims comprises the following elements:
- a predictive presence server,
- a location tracking server,
- a subscribing device,
- a mobile device,
- a receiving device.

The subscribing device is adapted to subscribe to the service by sending a subscription message to the predictive presence server. The predictive presence server is adapted to define, based on the subscription message, a content to be delivered to the receiving device and a predictive presence condition for delivery of the content.

The predictive presence server is further adapted to send a query message to the location tracking server and/or the mobile device itself,
the location tracking server is adapted to send, in response to the query message from the predictive presence server and/or the mobile device itself is adapted to send, in response to the query message from the predictive presence server, a single or a series of location message(s) including location information regarding the location of the mobile device to the predictive presence server. The location tracking server may reside on the mobile device. A series of location messages could be generated on basis of time and/or geographical constraints, e.g. a message every 30 secs or for every 1 km of movement.

The predictive presence server is further adapted to monitor conditions, based on the received location information, the predictive presence server is further adapted to deliver the content to the receiving device, in case the predictive presence condition is fulfilled.

In a particularly preferred embodiment of the inventive arrangement, the location tracking server is adapted to detect the location of the mobile device based on a wireless communication network, the mobile device is attached to.

In one embodiment, the wireless communication network is a vehicular network and the mobile device either is substantially at rest with reference to the wireless communication network or moves arbitrarily within a region defined by the geographical boundaries in case of a vehicular network, and the location tracking server is adapted to detect the location of the mobile device based on that the wireless communication network moves as a single unit with semi-deterministic mobility behaviour.

An arrangement according to this embodiment of the invention thus comprises a predictive presence server with one or possibly more server elements, a location tracking server and one or more wireless communication network(s), where a whole network moves as a single unit with semi-deterministic mobility behaviour. The system enables the prediction of location for mobile entities attached to the referred moving network and provides content related information to a recipient. Semi-deterministic means that the characteristic of the movement of the considered mobile entities can be predicted with a high probability.

In an alternative embodiment, the wireless communication network is a cellular mobile network, in particular a UMTS-network, and the mobile device moves with reference to the wireless communication network, and the location tracking server is adapted to detect the location of the mobile device based on its location in the wireless communication network, in particular its location area or cell location.

The predictive presence service respectively arrangement according to the invention is thus applicable to mobile entities located within moving networks, and also to individual mobile nodes with semi-deterministic behaviour.

In further developed embodiments, the predictive presence server and/or the location tracking server is/are part of the wireless communication network.

In still further embodiments, the predictive presence server and/or the location tracking server is/are located external to the wireless communication network.

In some embodiments of the inventive arrangement, the predictive presence server and/or the location tracking server is/are located at a fixed location.

Thus a predictive presence server can be located either within a moving network as an inherent part and offer access to subscribers within the moving network or it can be located external as a centralized server and provide access to any subscriber with sufficient authorization.

In preferred embodiments of the inventive arrangement, the subscribing device is a part of the wireless communication network.

In alternative preferred embodiments, the subscribing device is external to the wireless communication network.

In further embodiments, the subscribing device and/or the receiving device is/are an electronic communication device, in particular a second mobile device.

In other embodiments of the inventive arrangement, the receiving device is adapted to control further devices in response to the received content.

In some embodiments, at least two of the subscribing device, receiving device and mobile device are the same device. Predictive presence roles for subscriber, mobile entity and recipient can thus be combined in a flexible fashion. A non-human client can take any of the three defined roles at any time.

In further embodiments of the inventive arrangement, the predictive presence server is adapted to transmit a statistical information message to the receiving device including statistical information relating to the prediction accuracy.

The predictive presence server can thus provide statistical information to a recipient as part of the predictive presence information. The statistical information specifies the accuracy of the prediction for the mobile entity's presence in a certain period of time. This can be useful information for specific applications related to the recipient. The statistical information may be provided by any component in the predictive presence server that has sufficient knowledge to provide it.

In particular embodiments of the inventive arrangement, predictive presence server, mobile device and/or receiving device(s) and/or subscribing device are adapted to establish, before mutual message exchange, a security association between mobile device and predictive presence server and/or predictive presence server and receiving device(s) and/or mobile device and receiving device(s) and/or subscribing device and predictive presence server.

The predictive presence server can verify a required security association between a mobile entity and the recipient at any time after the subscriber registers a new predictive presence request. The security information is required to enable the exchange of mobile entity presence information and further content related data. The predictive presence request can be configured to ignore missing associations or to reject a request without sufficient associations.

The inventive solution assumes a node that may move around and arrive at a specific location at some point of time. The term 'mobile entity' or 'mobile device' is used to refer to mobile terminals or non human sensors or other electronic devices and equipment that may be attached to some moving network, e.g. a vehicular network.

The invention focuses on mobile entities respectively devices with movement behaviour that can be foreseen to some extent and whose presence at a specific location can therefore be predicted with a certain level of accuracy. Even for trains with a predetermined route there is still some uncertainty about the predictive presence due to unforeseeable events that change the traveling speed.

The term 'semideterministic' mobility behaviour has been introduced to take into account that movement situation of a mobile entity can't be predicted exactly but with a reasonable probability in a given period of time.

The predictive presence system may be even applicable to mobile entities located outside of vehicular networks with a predetermined route. It has to be considered that the level of accuracy for predictive presence can considerably drop for mobile entities that are not attached to a vehicle network ("vehicular bound").

For a vehicular bound mobile entity, connectivity to a public radio access (such as a satellite or cellular network) can be conveyed to a gateway node of the vehicular network. In this situation the location of the mobile entity is determined from the location of the vehicular network to which the mobile entity is attached, i.e. vehicular bound may not be responsible for determining their own location.

The vehicular network location can be determined in a number of ways; but examples include the vehicle determining its location itself from its relative position to stations/stops or waypoints marked along the pre-defined route or from more complex positioning technology such as GPS, or using information supplied by a wireless access network which locates the vehicle using positioning techniques such as determining which cell the vehicle is attached to.

There are three roles that need to be considered within the inventive predictive presence service method:
- The subscriber - the entity or device subscribing to the service and requesting what content should be provided, i.e. configuring the service
- The mobile entity - a vehicular or earth bound mobile entity with semi-deterministic mobility behaviour, whose location determines what content is provided to the user
- The recipient - can be an entity or group of entities who is receiving the content. This can be pure text message or in addition further application related to content and may require further actions to trigger by one or more recipients respectively receiving devices.

All three roles can be represented by any device or group of devices connected to the Internet that may control or operate electrical machines, apparatuses or other facilities.

These roles can be combined onto different devices or entities, so a single entity may act as both subscriber and recipient for example.

The service can operate in either a "push" or "pull" mode. In the former case, content is pushed to the recipient based on where the mobile entity will be at some point in the future, e.g. a weather report, information about taxi services etc. The same information can also be requested, or pulled, by the recipient from specified application servers. In this latter case, the subscriber and recipient roles are combined onto a single entity.

In general, a user subscribes to the service using the subscribing device, which is adapted to provide configuration inputs that determine how the service operates. For push services, these inputs include:
- Where the information should be sent, i.e. who is the recipient (single entity or group of entities)
- When the information should be sent, e.g. 10 minutes before specific destination. This is probably the way the subscriber wants to determine the time of message delivery. In fact the predictive presence server needs to calculate the prefered location based on an arrival estimate of the specified location.
- How the information should be sent e.g. SMS, e-mail
- What information should be sent, i.e. kind of information, level of detail.

These are the criteria for sending messages:
a) purely based on predicted location
b) based on predicted location in combination with other criteria such as date and time of day (e.g. not before 3 pm) or recipient specific profile information (such as current or historic location as far as it is known to the predictive presence server and the subscriber of the service).

Information that is delivered to the recipient can include plain text and optionally application content, a reference to it or even a running application like a java applet. Events can be used by the recipient terminal to perform a specific action, e.g. start an application / program on the local machine or establish a connection with specific attributes (e.g. tcp, ssh, etc.) to a specific host anywhere in the internet.

According to the invention, the provision of services based on the predicted location of a passenger provides a number of advantages. These include:
- proactive delivery of application content and specific events to enrich user experience and provide enhanced services. For example:
   -- from a business perspective: predicted presence can be used to optimize work & manufacturing processes by improving logistics (coordination of goods, human and other resources)
   -- from emergency perspectives: predicted presence can be used to prevent events that might result in accident / catastrophes by triggering appropriate counteraction, e.g. automatic collision warning system for planes or trains
   -- from mobile users perspective: predictive presence can provide effective coordination of time management for individual persons or groups of persons considering pre-execution of tasks (the meal in the oven is ready when you arrive at home, or a taxi is waiting for you at a train station)
   -- from traffic management and transportation perspective: reduction of traffic jams with the deployment of intelligent traffic direction systems by precalculating estimated traffic density at critical bottlenecks
- user configuration of the service to suit their personal requirements. The user is able to control what content they receive, when, and in what format. Support for the specification of basic and more complex conditions that govern when the information to be sent to a recipient. This allows the user (subscriber) to tune the service to his needs.
- separation of the subscriber, passenger and recipient roles increases the flexibility of the system, allowing many alternative deployment scenarios not currently available.
- content provided to the recipient can take multiple forms, from human-readable notifications to automated commands to trigger an application process. In addition, the predictive presence information can come with a qualitative metric to indicate the accuracy of the predicted location of the passenger (mobile entity), which will impact the accuracy of the content provided.
- the transmission medium used to pass information to the recipient can be based on multiple different technologies, including SMS and the Internet. The medium used can be configured on a per rule basis by the subscriber.
- this service is not just limited to moving networks, but can also be applied to individual mobile users in situations where their location at some point in the future can be predicted with a relative degree of accuracy (i.e. their mobile behaviour is semi-deterministic).
- the flexibility of this service allows it to be used in combination with existing services (such as the UMTS IMS-system) to extend current service offerings, and may enable extended or new business models. This may in turn stimulate to some extent the development and deployment of 3G and beyond 3G mobile networks.

Further aspects and advantages of the invention will become clear from the following description of exemplary embodiments with respect to the appended drawings, which show:
Fig. 1 an example of a local vehicular predictive presence service according to the invention,
Fig. 2 an example of a centralized predictive presence service according to the invention and
Fig. 3 an illustration of an exemplary interface definition for the interfaces between the predictive presence server and further devices of an embodiment of the predictive presence service arrangement according to the invention.

The predictive presence service can be deployed in two separate ways. The first is an implementation local to the vehicular network with a slightly restricted service offering, whilst the second is more complex to implement, but provides an extended service set to users via the use of a centralized server.

### 1. Local vehicular network service

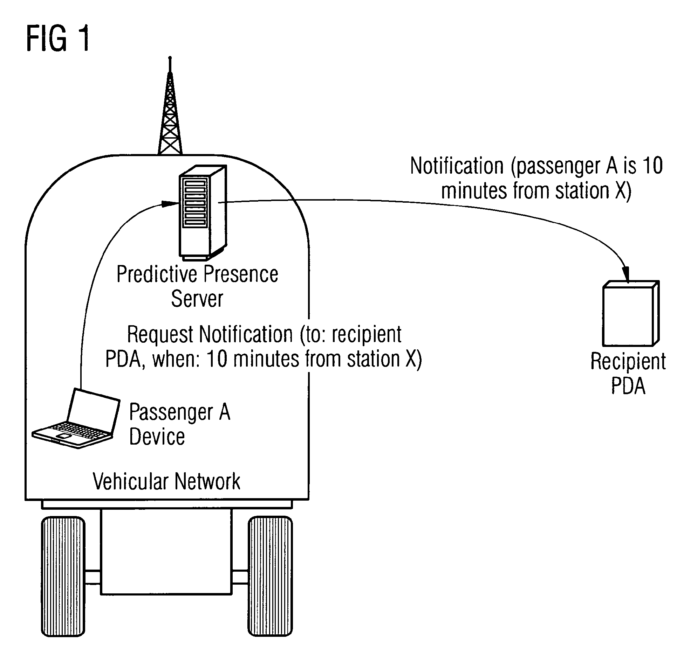

An illustration about local vehicular network service is shown in Fig. 1.

The vehicular network user can subscribe to the service that is provided via local services on the vehicle. The passenger configures the service to send information to the specified recipient (PDA) at the appropriate time and in the appropriate format. This solution can only be subscribed to by passengers devices attached to the local vehicular network, and is only valid for that single vehicle. Recipients need not be on the vehicular network.

### 2. Centralized service

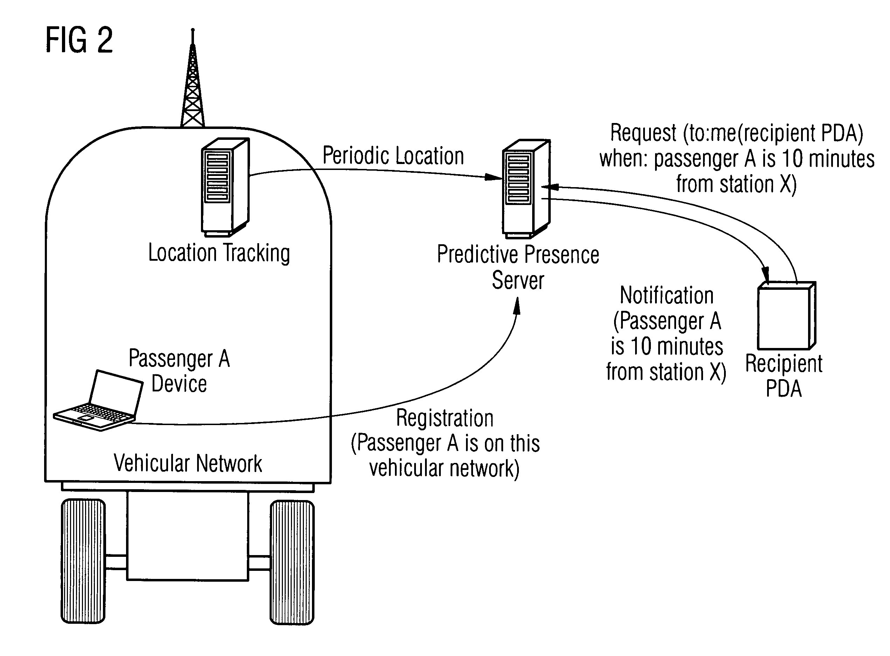

An illustration of a vehicular network service with centralized predictive presence server is shown in Fig. 2.

This service extends the implementation shown in Fig. 1 to allow remote entities to subscribe to the service, and to allow passengers to access the service across vehicles. In order to support this, a central predictive presence server is required within the fixed network via which devices can subscribe to the service, regardless of whether a mobile entity is attached to the vehicular network or not. This could be deployed as part of an UMTS IMS service for example. The predictive presence server requires information about which vehicle the mobile entity is on (either from a registration by the mobile entity, or from information provided by the subscriber via the subscribing device), and location information from the vehicular network about the whereabouts of the mobile entity.

As for the local service implementation, the subscriber provides the configuration information as to whom, how and when the information should be provided.

The concept of the predictive presence according to the invention is based on rules that are processed by the predictive presence server and managed by the subscriber. Several features are integrated into the rule processing mechanism to offer subscribers the flexibility to tailor the service to its individual requirements as good as possible. This includes the lifetime of rules, the definition of simple or complex conditions associated with predictive presence and the specification of notification mechanisms for one or more recipients in case the defined conditions are met.

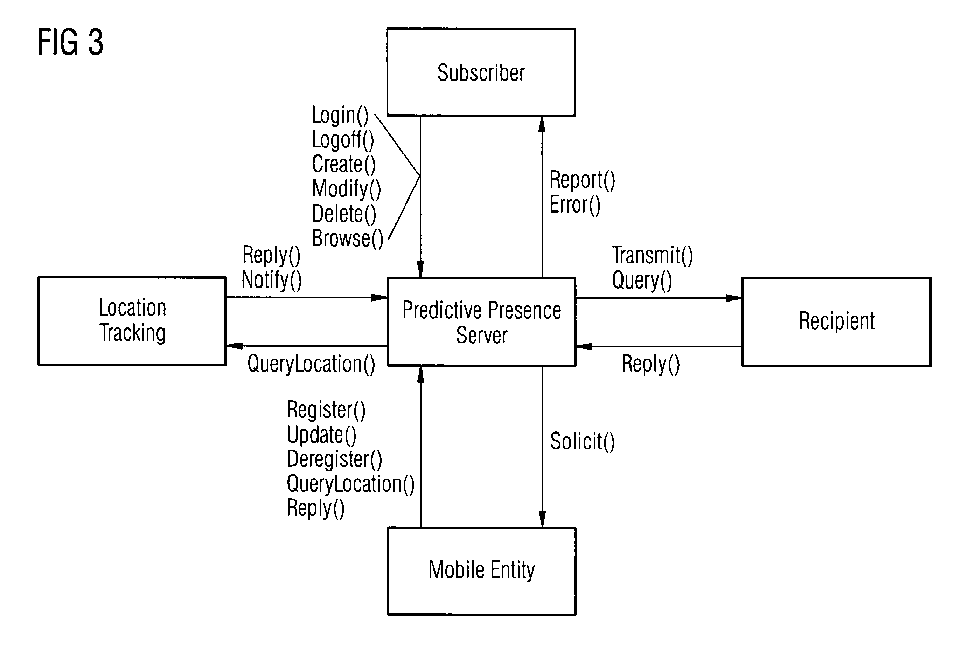

Fig. 3 illustrates the interactions of predictive presence server with other functional components of the predictive presence system. The following section illustrates an example interface specification for external interfaces of the Predictive Presence Server (Interface is abbreviated I/F):
- I/F towards Location Server
- I/F towards Subscriber
- I/F towards Mobile Entity
- I/F towards Recipient.

The description of interface should be understood as collection of logical functions, that may be distributed over several different communication layers and therefore don't represent a clear cut interface specification such as might be generated during a system design phase.

I/F towards Mobile Entity:
- Solicit ()
   The predictive presence server or some other entity in behalf sends a request to the mobile agent to register for predictive presence service. Alternatively the mobility agent may send the registration without prior request.
- Register ()
   The mobile entity registers with information that can be processed for the predictive presence service. Either the passenger device registers directly with the predictive presence server or there is some proxy, which is responsible to send the request for all mobile entities, who agree in the distribution of presence information. The following information is possible:
   -- passenger profile information (name, sex, age, profession, personal information like hobbies etc.);
   -- device information (IP address, host name, other device characteristics);
   -- moving network identifier (for central predictive presence server) ;
   -- operational state of mobile entity (active / idle / switched off);
   -- shared key, which may be required for security association of the mobile entity with the predictive presence server and with the recipient(s).
- Update ()
   The mobile entity may update the registration information due to some change in operational state or any other changed conditions related to the occurrence of specific events.
- Deregister ()
   The mobile entity deregisters indicating that it is no longer willing or able to participate in its role for the predictive presence service. Dependent on the solution chosen for the registration the mobile entity deregisters with the predictive presence server directly or with some proxy relaying the request.
- QueryLocation ()
   The predictive presence server queries current location of mobile entity from the entity itself in case there is no location tracking server or there are some constraints on the access
- Reply ()
   The mobile entity replies with its current geographical coordinates

I/F towards Recipient:
- Transmit()
   The predictive presence server sends a notification and/or action request to a recipient.
- Query ()
   Query specific information from a recipient that can be used to verify complex predicitve presence conditions:
   -- device info,
   -- location info,
   -- user info,
   -- security association.

The server may ask the recipient to regularly provide updates to the queried information (necessary for dynamic change, e.g. location data) but may also poll from time to time to keep state in the recipient.
- Reply()
   Asynchronous reply to query from predictive presence server
   I/F towards Subscriber:

- Login ()
   The subscriber has to authenticate and wait for authorization.
- Create ()
   The subscriber may create new rules
- Delete ()
   The subscriber may delete existing rules
- Modify ()
   The subscriber may modify existing rules
- Browse ()
   The subscriber may browse a list of active rules and define matching patterns to search for specific rules, e.g. Recipient ID, Mobile Entity ID, device / user / location specific criteria.
- Report ()
   The server may create records about events of predictive presence with the associated statistic information.
- Logoff ()
   The subscriber terminates a session with the server
- Error ()
   The server generates error messages. This may be associated with the following events:
   -- Recipient unknown
   -- Mobile Entity unknown
   -- Mobile Entity refuses to provide sufficient information for predictive presence
   -- Location tracking of a recipient is not possible or not precise
   -- Recipient not reachable
   -- Rule syntax is incorrect
   -- Missing security association between Moble Entity and Recipient

I/F towards Location Server:
- QueryLocation ()
   The predictive presence server queries current location of mobile entity or queries for notification services related to geographical coordinates.
- Reply ()
   The location server replies with the current geographical coordinates for a mobile entity
- Notify ()
   The location server informs the predictive presence server, if a mobile entity has reached or left a specific geographical area.

The following section is an example for a Predictive Presence Syntax Description in BNF (Backus Naur Form). Illustrated is an example syntax description for defining predictive presence rules, created or modified by the subscriber and executed by the predictive presence server.
<Predictive Presence Rule> ::=
RULE <Predictive Presence Statement> < Separator>
{<Recipient ID>}<Separator>< Lifetime><Separator>
[Rule Options]
<Predictive Presence Statement> ::=
< Predictive Presence Condition>
BEGIN
{< Message> <Separator> }
{< Notification Mechanism > <Separator>}
END
< Predictive Presence Condition > ::=
<Simple Condition> [<Boolean Expression>
< Predictive Presence Condition >]
<Complex Condition> [<Boolean Expression>
< Predictive Presence Condition > ]
<Simple Condition> ::=
COND (<Mobile Entity ID> <Separator>
<Location> <Separator > <Arrival Time>)
<Complex Condition> ::=
COND <Simple Condition>
[<Boolean Expression> (DAYTIME <Separator>
<Time of Day> )]
[<Boolean Expression> (DATE <Separator >
<Calendar Date>)]
[<Boolean Expression> (MOB_ID<Separator>
<Mobile Entity Specific Data>)]
[{<Boolean Expression> (REC_ID<Separator>
<Recipient Specific Data>)]
[{<Boolean Expression> (REC_LOC <Separator>
<Recipient Location> <Separator> <Recipient ID>)}]
<Message> ::=
MSG < ASCII text > [<Separator> <Application Content>
<Separator> <Meta Information>]
<Application Content> ::=
{<Server Address> <Separator> <Protocol ID>
[<Separator> <Shared Key>]
[<Separator> <Session Content>]
[<Separator> <Content Reference>]
[<Separator> <Application Code>]}
< Server Address > ::= < Address >
< Address > ::=
IP_ADRv6 <IPv6 Address> | IP_ADRv4 <IPv4 Address> |
HOST_NAME <DNS Hostname> | URL < URL Address >
< Protocol 1D> ::=
http | ftp | telnet | ssh | rsh | rlogin
< Content Reference > ::=
<Reference Address> [ <Separator> <Shared Key> ]
[ <Separator> < Reference Details > ]
< Reference Address > ::= < Address >
<Notification Mechanism> ::=
<Recipient ID> <Separator> <Notification Medium>
<Separator> <Recipient Address> <Separator>
[<Priority>]
< Notification Medium> ::=
smtp | sms | ems | mms | el64 | fax
< Priority > ::= MANDATORY | OPTIONAL
<Lifetime> ::=
One Off | Token <Number>| <Time Interval>|
<Duration> I No Expiry
<Time Interval> ::=
INTERVAL(< Start Time> <Separator> <End Time>)
<Duration> ::=
DURATION <Time in Days | Hours | Minutes | Seconds>
< Recipient Address > ::=
IP_ADRv6 < IPv6 Address> | IP_ADRv4 <IPv4 Address> |
HOST_NAME <DNS Hostname> | < Application Address > E164
<e164number>
<Rule Options> ::= <Notification Access>
<Notification Access> ::= Pull | Push
<Boolean Expression> ::= AND | OR | XOR | NOT | NOR | NAND
<Separator> ::= ; | #

The invention is not restricted to the above described specific aspects and embodiments but can also be carried out in numerous modifications and combinations thereof.

## Claims

**1.** Method for providing an automated predictive presence service, comprising the steps of
- sending a subscription message including subscription information from a subscribing device to a predictive presence server;
- in response to the subscription information, defining and storing in the predictive presence server:
-- content information related to content and/or a reference to respective content which is to be delivered to a receiving device or group of devices and
-- a predictive presence condition for the delivery of the content or reference to the content;
- detecting by a location tracking server the current location of the mobile device making use of a wireless communication network, the mobile device is attached to;
- sending a location message including location information related to the current location of the mobile device from the location tracking server and/or by the mobile device itself to the predictive presence server;
- processing the location information and the predictive presence condition in the predictive presence server to detect, whether the predictive presence condition is met;
- in case the predictive presence condition is met, providing content from the predictive presence server to the receiving device or group of devices.

**2.** Method according to claim 1,
**characterized in that**
the processing of the location information comprises a calculation of a predicted location of the mobile device based on an assumed semi-deterministic behaviour of the wireless communication network, with the assumption that the mobile device either is substantially at rest with reference to the network or moves arbitrarily within a region defined by the geographical boundaries in case of a vehicular network.

**3.** Method according to claim 1,
**characterized in that**
the processing of the location information comprises a calculation of a predicted location of the mobile device based on an assumed semi-deterministic behaviour of the mobile device when moving through the wireless communication network.

**4.** Method according to any one of the preceding claims,
**characterized in that**
the predictive presence condition describes in formal notation the presence of the mobile device for an estimated arrival time.

**5.** Method according to claim 4,
**characterized in that**
the predictive presence condition includes additional formal conditional statements regarding at least one of
- date and/or time of day,
- mobile device specific information,
- mobile device user profile specific information,
- receiving device specific information,
- receiving device user profile specific information.

**7.** Method according to claim 6,
**characterized in that**
the conditional statements are related to each other via Boolean operations to form the predictive presence condition.

**8.** Method according to any one of the preceding claims,
**characterized in that**
the predictive presence condition is deleted in the predictive presence server after it has been met once or a specified number of times and/or
the predictive presence condition is valid for a time interval calculated in the predictive presence server according to the subscription information.

**9.** Method according to any one of the preceding claims,
**characterized in that**
the subscription information comprises a notification medium for the content and a way of addressing the receiving entity.

**10.** Method according to any one of the preceding claims,
**characterized in that**
by sending a modification message from the subscription device to the predictive presence server and subsequent processing of the modification message in the predictive presence server, the predictive presence condition is modified.

**11.** Method according to any one of the preceding claims,
**characterized in that**
the content provided to the receiving device is related to a location, where the mobile device is predicted to arrive.

**12.** Method according to any one of the preceding claims,
**characterized in that**
the content is provided by delivering it via transmission from the predictive presence server to the receiving device (push mode) and/or by providing the receiving entity access to the content (pull mode) .

**13.** Method according to any one of the preceding claims,
**characterized in that**
the content to be provided is plain text and/or application related content.

**14.** Method according to any one of the preceding claims,
**characterized in that**
the content to be provided is application related information, in response to which the receiving entity processes predetermined and/or received application content.

**15.** Arrangement for implementing a predictive presence service of any one of the preceding claims,
comprising the following elements:
- a predictive presence server,
- a location tracking server,
- a subscribing device,
- a mobile device,
- a receiving device, whereby the subscribing device is adapted to subscribe to the service by sending a subscription message to the predictive presence server,
the predictive presence server is adapted to define, based on the subscription message, a content to be delivered to the receiving device and a predictive presence condition for delivery of the content,
the predictive presence server is further adapted to send a query message to the location tracking server and/or the mobile device itself,
the location tracking server is adapted to send, in response to the query message from the predictive presence server, and/or the mobile device itself is adapted to send, in response to the query message from the predictive presence server,
a single or a series of location message(s) including location information regarding the location of the mobile device to the predictive presence server,
the predictive presence server is further adapted to monitor conditions, based on the received location information,
the predictive presence server is further adapted to deliver the content to the receiving device, in case the predictive presence condition is fulfilled.

**16.** Arrangement according to claim 15,
**characterized in that**
the location tracking server is adapted to detect the location of the mobile device based on a wireless communication network, the mobile device is attached to.

**17.** Arrangement according to claim 16,
**characterized in that**
the wireless communication network is a vehicular network and the mobile device is either substantially at rest with reference to the wireless communication network or moves arbitrarily within a region defined by the geographical boundaries in case of a vehicular network, and
the location tracking server is adapted to detect the location of the mobile device based on that the wireless communication network moves as a single unit with semi-deterministic mobility behaviour.

**18.** Arrangement according to claim 16,
**characterized in that**
the wireless communication network is a cellular mobile network, in particular a UMTS-network, and the mobile device moves with reference to the wireless communication network, and
the location tracking server is adapted to detect the location of the mobile device based on its location in the wireless communication network, in particular its location area or cell location.

**19.** Arrangement according to any one of claims 16 to 18,
**characterized in that**
the predictive presence server and/or the location tracking server is/are part of the wireless communication network.

**20.** Arrangement according to any one of claims 16 to 18,
**characterized in that**
the predictive presence server and/or the location tracking server is/are located external to the wireless communication network.

**21.** Arrangement according to any one of claims 16 to 20,
**characterized in that**
the predictive presence server and/or the location tracking server is/are located at a fixed location.

**22.** Arrangement according to any one of claims 16 to 21,
**characterized in that**
the subscribing device is a part of the wireless communication network.

**23.** Arrangement according to any one of claims 16 to 21,
**characterized in that**
the subscribing device is external to the wireless communication network.

**24.** Arrangement according to any one of claims 15 to 23,
**characterized in that**
the subscribing device and/or the receiving device is/are an electronic communication device, in particular a second mobile device.

**25.** Arrangement according to any one of claims 15 to 24,
**characterized in that**
the receiving device is adapted to control further devices in response to the received content.

**26.** Arrangement according to any one of claims 15 to 25,
**characterized in that**
at least two of the subscribing device, receiving device and mobile device are the same device.

**27.** Arrangement according to any one of claims 15 to 26,
**characterized in that**
the predictive presence server is adapted to transmit a statistical information message to the receiving device including statistical information relating to the prediction accuracy.

**28.** Arrangement according to any one of claims 15 to 27,
**characterized in that**
predictive presence server, mobile device and/or receiving device(s) and/or subscribing device are adapted to establish, before mutual message exchange, a security association between mobile device and predictive presence server and/or predictive presence server and receiving device(s) and/or mobile device and receiving device(s) and/or subscribing device and predictive presence server.
